# EUROPEAN PATENT SPECIFICATION

(11) **EP 1 236 921 B1**
(45) Date of publication and mention of the grant of the patent: **12.11.2003**
(21) Application number: 02075716.7
(22) Date of filing: 22.02.2002
(51) Int. Cl.: F16D 65/06

(54) **Method of mounting a plurality of brake blocks**
Verfahren zur Befestigung einer Vielzahl von Bremsklötzen
Procédé de montage d'une pluralité de sabots de frein

(30) Priority: 01.03.2001 GB 0105215
(43) Date of publication of application: 04.09.2002
(73) Proprietor: Federal-Mogul Friction Products Limited, High Peak, Derbyshire SK23 0JP (GB)
(72) Inventor: Gibson, Paul Andrew, Buxton, Derbyshire SK17 7PS (GB)
(74) Representative: Drury, Peter Lawrence

(56) References cited:
- GB-A- 442 236
- US-A- 2 900 711
- US-A- 3 957 139

## Description

This invention is concerned with a method of mounting brake blocks. In particular, the method is applicable to the mounting of brake blocks for railway vehicles.

In many cases, brake blocks for railway vehicles are arranged to engage a wheel of the vehicle. In other words, the blocks are forced into engagement with a peripheral portion of the wheel to apply a frictional force to the wheel to brake it and hence the vehicle. Accordingly, the surface of contact between the brake blocks and the wheel is arcuate. Because it is usually very difficult to gain access to the area where such brake blocks are mounted, it is usually the case that it is impractical to utilise a single continuous block, which would be difficult to replace because of the access problem. It is common practice for such blocks to be mounted in pairs in a single holder with the two blocks spaced circumferentially of the wheel. In other words, the blocks follow one another closely in a direction parallel to the peripheral edge of the wheel. Such pairs of blocks can then be replaced one after the other gaining access from different directions. Because, it is rare for the holder to be tailored to the diameter of the wheel with which it is associated and because it is impractical to individually tailor the brake blocks, there is frequently a very poor fit between the surfaces of newly-installed brake blocks and the peripheral surface of the wheel. However, the fit is improved as the blocks wear with contact with the wheel during braking until the surfaces of the brake blocks become complementary to the surface of the wheel. This has disadvantages in that, during the initial "bedding in" period in which the blocks wear as aforementioned, poor braking performance may be experienced and the wear is excessive.

The disadvantage of poor braking performance mentioned above is not acute where the brake blocks are made of the conventional cast iron because the bedding-in period is very short because such brake blocks wear rapidly and the bedding-in period may be only a few brake applications. However, excessive wear is a problem with this material and even a few brake applications with poor braking performance may result in dangerous situations. With more modern brake block materials, however, many applications may be required before sufficient wear has occurred and, as a result, the potential for dangerous situations is proportionately increased.

It has been found that the problem of long bedding-in periods can be reduced by manufacturing the blocks so that they taper so that the thickness of the blocks is greatest at the centre of the holder where the blocks are adjacent to one another and the thickness reduces towards the circumferentially spaced edged of the holder, ie the blocks vary in thickness so that they are at their thinnest at their edges which are remote from the adjacent block This tapering ensures that, during bedding-in, both blocks engage the peripheral surface of the wheel at the centre of the holder, thereby providing a substantially continuous braking surface which is found to reduce the bedding-in period and improve the braking performance during bedding-in. However, because the holders are designed to accommodate generally rectangular and untapered blocks which are symmetrical, the potential exists for one or both of such brake blocks to be fitted in the wrong orientation, ie with their thickest portions at the circumferential edges of the holder. The fitting of the blocks in exactly the wrong orientation would make the braking performance worse rather than better. Accordingly, it is desirable for there to be a method of mounting such brake blocks which ensures that the blocks cannot be mounted in the wrong orientation, which method does not require modification of the holders.

The invention provides a method of mounting a plurality of brake blocks in circumferential alignment with one another and in opposed relationship to a peripheral surface of a member which is rotatable about an axis so that the blocks can be moved simultaneously into engagement with said peripheral surface to apply a braking force to the member, the method comprising mounting the blocks on a common holder which is mounted in opposed relationship to said peripheral surface and is movable towards and away from said peripheral surface, characterised in that the method also comprises providing at least one of said brake blocks with one or more projections arranged to prevent mounting of one or more of the blocks on the holder unless the blocks are arranged in a desired orientation.

In a method according to the invention, if a first block is mounted on the holder in an incorrect orientation, eg with a taper as referred to above extending in the wrong direction, the projection or projections of said block prevent the next adjacent block from being mounted on the holder. Alternatively, if a first block is mounted in the correct orientation but an attempt is made to mount the next adjacent block in an incorrect orientation, the projection or projections prevent mounting of the second block. In either case, the person who has or is attempting to mount a block in the incorrect orientation is alerted to his mistake by being prevented from mounting the next block.

The brake block may, as is conventional, comprise an assembly of a backing plate and friction material secured to the backing plate. In this case. the or at least one of said projections may be formed of friction material, or may be formed integrally with said backing plate. of said projections, or may be formed partially by the backing plate and partially by the friction material.

Preferably, the friction material of each brake block is thicker at an end portion of the brake block which is furthest from the or each projection.

Preferably, the or at least one of said projections extends from an end portion of the block in a direction which, when the block is mounted on the holder, is generally circumferential relative to the rotatable member and, if the block is in its correct orientation, extends away from the other block. For example, the projection may extend, in a direction axially of the wheel, for at least half the width of the brake block. The projection may have a side surface which is inclined relative to a longitudinal plane of the block.

The invention also provides a brake block suitable for use in a method according to the invention, the brake block comprising at least one projection arranged to prevent mounting of the block or an adjacent block on a holder unless the blocks are arranged in a desired orientation.

There now follows a detailed description, to be read with reference to the accompanying drawings of a method of mounting a plurality of brake blocks which is illustrative of the invention.

In the drawings:
Figure 1 is a diagrammatic side view of a portion of a wheel and brake blocks engaging the peripheral surface of the wheel;
Figure 2 is a plan view of one of the brake blocks shown in Figure 1: and
Figures 3 and 4 are perspective views of the brake block shown in Figure 2 taken from different angles.

The illustrative method is a method of mounting two brake blocks 10 and 12 in circumferential alignment with one another and in opposed relationship to a peripheral surface 14 of a member 16 which is rotatable about an axis 18 Specifically, the member 16 is a railway vehicle's wheel. The blocks 10 and 12 are mounted so that they can be moved simultaneously into engagement with the peripheral surface 14 of the wheel 16 to apply a braking force to the wheel.

The blocks 10 and 12 are mirror images of one another so that only one will be described in detail, equivalent references being used for equivalent parts of the two blocks so that, for example, part 10a of the block 10 corresponds to part 12a of the block 12. The block 10 comprises an assembly of a backing plate 10a, which is generally rectangular and is made of sheet steel, and friction material 10b secured to the backing plate 10a.

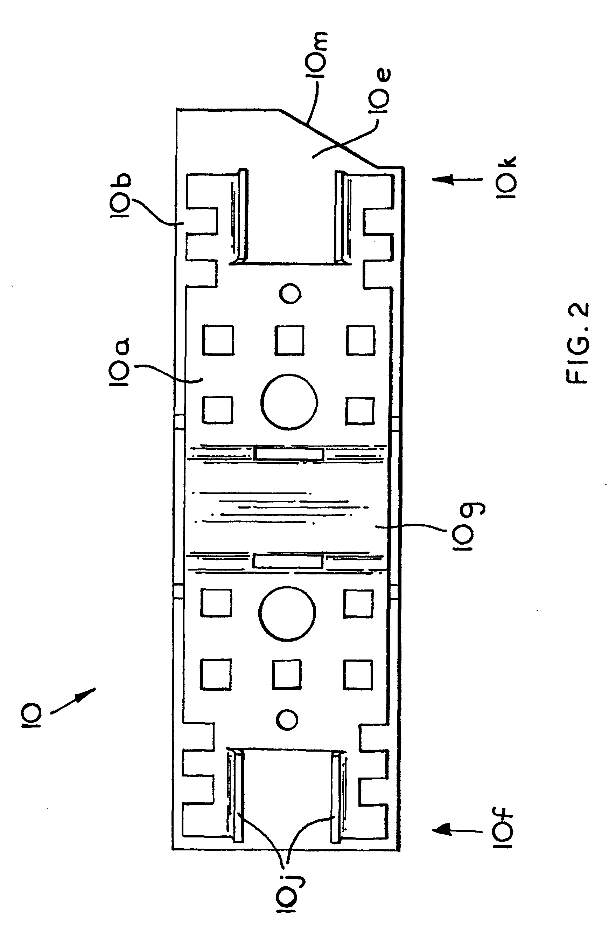

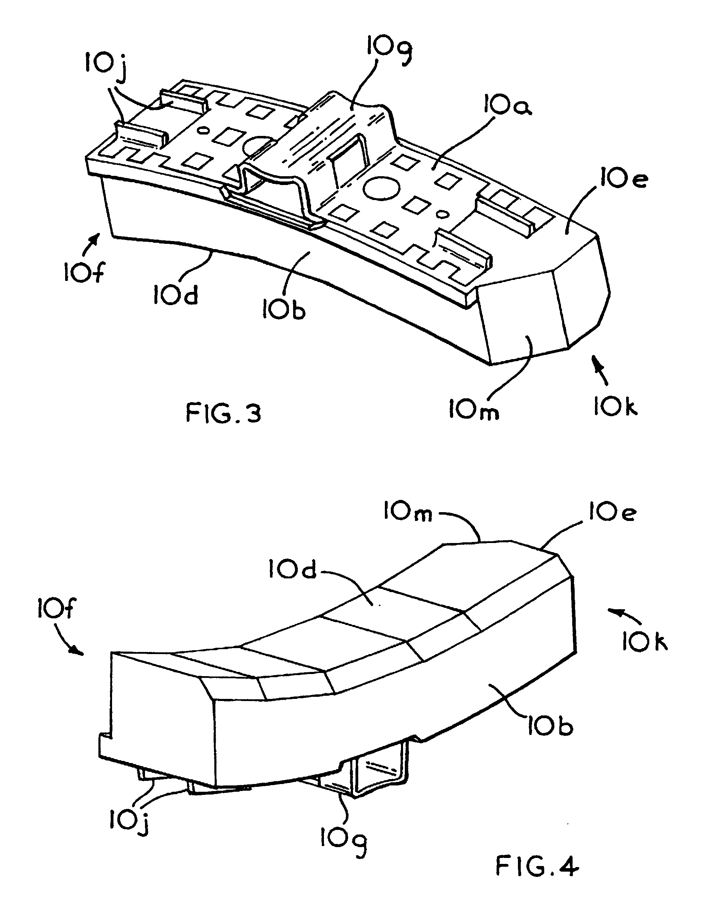

Specifically, the friction material 10b is a phenolic resin bound material which is moulded in situ against one surface of the backing plate 10a and is secured thereto by adhesive and by projections 10c of the backing plate 10a which are embedded in the material 10b. However, other forms of friction material, such as sintered or cast metal, may be used. The friction material 10b presents a facetted surface 10d to the peripheral surface 14 of the wheel. As can be seen most clearly in Figure 4 the facetted surface 10d has five generally planar sections which are inclined to one another so as to generally follow the curvature of a portion of the surface 14 of the wheel 16. Instead of being facetted, the surface 10d could follow a continuous curve or a series of curves. The friction material 10b is moulded so that it is generally rectangular in plan view (see Figure 2) except that it has a projection 10e which will be described further hereinafter. The friction material 10b is also moulded so that its thickness (in a direction radially of the wheel 16 and normal to the backing plate 10a) varies. Specifically, the thickness of the material 10b is greatest adjacent one end portion 10f of the block 10 and approximately constant over the remainder of the block 10.

The backing plate 10a comprises a projection 10g which projects from a central portion of the plate 10a in a direction away from the friction material 10b The projection 10g is used to secure the block 10 in a holder 20, the projection 10g having aligned holes 10h in which a pin (not shown) can be received to secure the block 10 to the holder 20. The backing plate 10a also comprises projections in the form of lugs 10j which locate in slots (not shown) of the holder 20 to prevent the block 10 from turning relative to the holder 20.

The holder 20 is of conventional construction and is generally arcuate about the axis 18 and is mounted for movement towards the axis 18 to bring the surface 10d of the block 10 into engagement with the peripheral surface 14 of the wheel 16, or in the opposite direction to disengage the surfaces 10d and 14 Specifically, the holder 20 is arranged to hold two blocks 10 and 12 in circumferential alignment and close proximity to one another. Thus, the surfaces 10d and 12d of the blocks extend generally tangentially of the surface 14 and the backing plates 10a and 12a are inclined to one anther at an angle which is dependant on the radius of the surface 14 and on the width of the gap 22 between the surfaces 10d and 12d (this width being made small in the interests of improved braking performance).

The projection 10e of the friction material 10b is formed integrally with the remainder of the material 10b and extends from an opposite end portion 10k of the friction material 10b to the end portion 10f. The projection 10e extends the full thickness of the friction material 10b but only part of the width thereof. Specifically, as can be seen in Figure 2, the projection 10e is bounded by an end surface 10m which is inclined to the longitudinal plane of the block 10 for a portion of its length and parallel thereto for the remainder of its length.

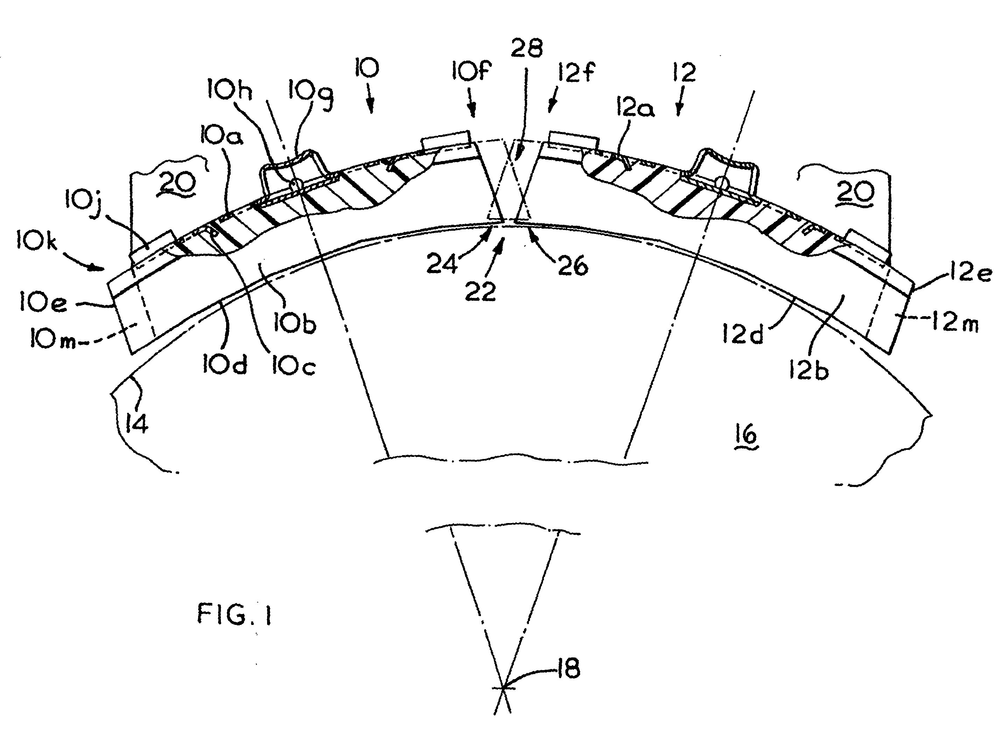

In the illustrative method, the blocks 10 and 12 are mounted on a common holder 20 and, as described above, the blocks 10 and 12 are provided with projections 10e. These projections 10e are arranged to prevent mounting of the blocks on the holder unless the blocks are arranged in a desired orientation. The desired orientation is with the end portions 10f and 12f, which have the thickest friction material 10b and 12b, adjacent to one another. These orientations result in the projections 10e and 12e being at opposite ends of the holder 20. If it is assumed that the block 10 is mounted first on the holder 20 in the correct orientation, ie with the projection 10e at the left end of Figure 1 (as shown), it is only possible to mount the block 12 on the holder 20 in the correct orientation, ie with the projection 12e at the right end of Figure 1. Any attempt to mount the block 12 in the incorrect orientation, ie with the projection 12e at the centre of Figure 1, is prevented by interference between the projection 12e and the edge of the end portion 10f of the block 10. The area of interference is indicated by 24 in Figure 1. If, on the other hand, the block 10 has been mounted in the incorrect orientation, ie with the projection 10e at the centre of Figure 1, the interference between the blocks 10 and 12 will prevent mounting of the block 12 in the holder 20 in either of the possible orientations. If the block 12 is in its correct orientation, the interference will be over the area indicated at 26 in Figure 1 and, if the block 12 is in its incorrect orientation, the interference will be over a much larger area indicated by 28.

## Claims

1. A method of mounting a plurality of brake blocks (10, 12) in circumferential alignment with one another and in opposed relationship to a peripheral surface (14) of a member (16) which is rotatable about an axis (18) so that the blocks can be moved simultaneously into engagement with said peripheral surface to apply a braking force to the member, the method comprising mounting the blocks on a common holder (20) which is mounted in opposed relationship to said peripheral surface and is movable towards and away from said peripheral surface. **characterised in that** the method also comprises providing at least one of said brake blocks (10, 12) with one or more projections (10e, 12e) arranged to prevent mounting of one or more of the blocks on the holder unless the blocks are arranged in a desired orientation.

2. A method according to claim 1, **characterised in that** each brake block comprises an assembly of a backing plate (10a, 12a) and friction material (10b, 12b) secured to the backing plate, the or at least one of said projections (10e, 12e) being formed of friction material.

3. A method according to claim 1, **characterised in that** each brake block comprises an assembly of a backing plate (10a 12a) and friction material (10b, 12b) secured to the backing plate, the or at least one of said projections being formed integrally with said backing plate.

4. A method according to claim 1, **characterised in that** each brake block comprises an assembly of a backing plate (10a, 12a) and friction material (10b, 12b) secured to the backing plate, the or at least one of said projections being formed partially by the backing plate and partially by the friction material.

5. A method according to any one of claims 2 to 4, **characterised in that** the friction material (10b, 12b) of each brake block is thicker at an end portion (10k, 12k) of the brake block which is furthest from the or each projection

6. A method according to any one of claims 1 to 5, **characterised in that** the or at least one of said projections (10e, 12e) extends from an end portion (10f, 12f) of the block in a direction which, when the block is mounted on the holder, is generally circumferential relative to the rotatable member and, if the block is in its correct orientation, extends away from the other block.

7. A method according to claim 6, **characterised in that** the projection (10e, 12e) extends, in a direction axially of the wheel, for at least half the width of the brake block.

8. A method according to either one of claims 6 or 7. **characterised in that** the projection (10e, 12e) has a side surface (10m, 12m) which is inclined relative to a longitudinal plane of the block.

9. A brake block suitable for use in a method according to any one of claims 1 to 8, **characterised in that** the brake block (10, 12) comprises at least one projection (10e, 12e) arranged to prevent mounting of the block next to an adjacent block on a holder unless the blocks are arranged in a desired orientation.

## Patentansprüche

1. Verfahren zur Befestigung einer Mehrzahl von Bremsklötzen (10, 12) in umfänglicher Ausrichtung miteinander und in entgegengesetzter Beziehung zu einer peripheren Oberfläche (14) eines Elements (16), welches drehbar um eine Achse (18) ist, so dass die Klötze simultan zum Eingriff in die periphere Oberfläche bewegt werden können, um eine Bremskraft auf das Element aufzubringen, wobei das Verfahren beinhaltet, die Klötze auf einem gemeinsamen Halter (20) zu befestigen, welcher in entgegengesetzter Beziehung zu der peripheren Oberfläche befestigt ist, und bewegbar hin zu und weg von der peripheren Oberfläche ist, **dadurch gekennzeichnet, dass** das Verfahren ebenfalls beinhaltet, mindestens einen der Bremsklötze (10, 12) mit einem oder mehreren Vorsprüngen (10e, 12e) zu versehen, die angeordnet sind, um die Befestigung von einem oder mehreren der Klötze auf dem Halter zu verhindern, wenn die Klötze nicht in einer gewünschten Orientierung befestigt sind.

2. Verfahren gemäß Anspruch 1, **dadurch gekennzeichnet, dass** jeder Bremsklotz eine Anordnung von einer Verstärkungsplatte (10a, 12a) und von Reibmaterial (10b, 12b) aufweist, welches an der Verstärkungsplatte befestigt ist, wobei der oder mindestens einer der Vorsprünge (10e, 12e) durch Reibmaterial gebildet wird.

3. Verfahren gemäß Anspruch 1, **dadurch gekennzeichnet, dass** jeder Bremsklotz eine Anordnung von einer Verstärkungsplatte (10a, 12a) und von Reibmaterial (10b, 12b) aufweist, welches an der Verstärkungsplatte befestigt ist, wobei der oder mindestens einer der Vorsprünge (10e, 12e) einstückig mit der Verstärkungsplatte gebildet ist.

4. Verfahren gemäß Anspruch 1, **dadurch gekennzeichnet, dass** jeder Bremsklotz eine Anordnung von einer Verstärkungsplatte (10a, 12a) und von Reibmaterial (10b, 12b) aufweist, welches an der Verstärkungsplatte befestigt ist, wobei der oder mindestens

5. Verfahren gemäß einem der Ansprüche 2 bis 4, **dadurch gekennzeichnet, dass** das Reibmaterial (10b, 12b) jedes Bremsklotzes an einem Endabschnitt (10k, 12k) des Bremsklotzes dicker ist, welcher am weitesten von dem oder jedem der Vorsprünge entfernt ist.

6. Verfahren gemäß einem der Ansprüche 1 bis 5, **dadurch gekennzeichnet, dass** der oder mindestens einer der Vorsprünge (10e, 12e) sich von einem Endabschnitt (10f, 12f) des Klotzes in eine Richtung erstreckt, welche, wenn der Klotz auf dem Halter befestigt ist, generell umfänglich relativ zu dem drehbaren Element ist und, falls der Klotz in seiner korrekten Orientierung ist, sich von dem anderen Klotz weg erstreckt.

7. Verfahren gemäß Anspruch 6, **dadurch gekennzeichnet, dass** sich der Vorsprung (10e, 12e), in einer Richtung axial von dem Rad, über mindestens die halbe Breite des Bremsklotzes erstreckt.

8. Verfahren gemäß einem der Ansprüche 6 oder 7, **dadurch gekennzeichnet, dass** der Vorsprung (10e, 12e) eine Seitenoberfläche (10m, 12m) aufweist, welche relativ zu einer longitudinalen Ebene des Klotzes geneigt ist.

9. Ein Bremsklotz, der für die Verwendung in einem Verfahren gemäß einem der Ansprüche 1 bis 8 geeignet ist, **dadurch gekennzeichnet, dass** der Bremsklotz (10, 12) mindestens einen Vorsprung (10e, 12e) aufweist, der angeordnet ist, um die Befestigung des Klotzes neben einem angrenzenden Klotz auf dem Halter zu verhindern, wenn die Klötze nicht in einer gewünschten Orientierung angeordnet sind.

## Revendications

1. Procédé de montage d'une pluralité de sabots (10, 12) de frein en alignement circonférentiel les uns avec les autres et dans une disposition opposée par rapport à une surface périphérique (14) d'un élément (16) qui est mobile en rotation autour d'un axe (18), de sorte que les sabots peuvent venir simultanément en engagement avec ladite surface périphérique pour appliquer une force de freinage à l'élément, le procédé comprenant le montage des sabots sur un porte-sabot commun (20) qui est monté dans une disposition opposée par rapport à ladite surface périphérique et qui est mobile en s'approchant et en s'écartant de ladite surface périphérique ; **caractérisé en ce que** le procédé comprend également le fait de doter au moins l'un desdits sabots (10, 12) de frein d'une ou de plusieurs saillies (10e, 12e) agencées pour empêcher le montage d'un ou de plusieurs des sabots sur le porte-sabot sauf si les sabots sont agencés dans une orientation souhaitée.

2. Procédé selon la revendication 1, **caractérisé en ce que** chaque sabot de frein comprend un ensemble d'un plateau de frein (10a, 12a) et d'un matériau (10b, 12b) de friction fixé au plateau de frein, la ou au moins l'une desdites saillies (10e, 12e) étant constituée de matériau de friction.

3. Procédé selon la revendication 1, **caractérisé en ce que** chaque sabot de frein comprend un ensemble d'un plateau de frein (10a, 12a) et d'un matériau (10b, 12b) de friction fixé au plateau de frein, la ou au moins l'une desdites saillies étant formée d'un seul tenant avec ledit plateau de frein.

4. Procédé selon la revendication 1, **caractérisé en ce que** chaque sabot de frein comprend un ensemble d'un plateau de frein (10a, 12a) et d'un matériau (10b, 12b) de friction fixé au plateau de frein, la ou au moins l'une desdites saillies étant formée en partie par le plateau de frein et en partie par le matériau de friction.

5. Procédé selon l'une quelconque des revendications 2 à 4, **caractérisé en ce que** le matériau (10b, 12b) de friction de chaque sabot de frein est plus épais au niveau d'une partie (10k, 12k) d'extrémité du sabot de frein qui est la plus éloignée de la ou de chaque saillie.

6. Procédé selon l'une quelconque des revendications 1 à 5, **caractérisé en ce que** la ou l'au moins une desdites saillies (10e, 12e) s'étend d'une partie (10f, 12f) d'extrémité du sabot dans une direction qui, lorsque le sabot est monté sur le porte-sabot, est globalement circonférentielle par rapport à l'élément mobile en rotation et qui, si le sabot se trouve dans son orientation correcte, s'étend en s'écartant de l'autre sabot.

7. Procédé selon la revendication 6, **caractérisé en ce que** la saillie (10e, 12e) s'étend, dans une direction axiale à la roue, sur au moins la moitié de la largeur du sabot de frein.

8. Procédé selon l'une quelconque des revendications 6 ou 7, **caractérisé en ce que** la saillie (10e, 12e) comporte une surface latérale (10m, 12m) qui est inclinée par rapport à un plan longitudinal du sabot.

9. Sabot de frein approprié pour utilisation dans un procédé selon l'une quelconque des revendications 1 à 8, **caractérisé en ce que** le sabot (10, 12) de frein comprend au moins une saillie (10e, 12e) agencée pour empêcher le montage, sur un porte-sabot, du sabot à proximité d'un sabot adjacent sauf si les sabots sont agencés suivant une orientation souhaitée.
